# EUROPÄISCHE PATENTANMELDUNG

(11) **EP 2 921 215 A1**
(43) Veröffentlichungstag der Anmeldung: **23.09.2015**
(21) Anmeldenummer: 15159761.4
(22) Anmeldetag: 19.03.2015
(51) Int. Cl.: B01D 33/21, B01D 33/23, B01D 33/46

(54) **Filtereinrichtung zur Filtration von Abwasser**

(30) Priorität: 20.03.2014 DE 102014103831
(71) Anmelder: Huber SE, 92334 Berching (DE)
(72) Erfinder: Frommann, Christian, 92318 Neumarkt (DE); Reber, Stefan, 90429 Nürnberg (DE); Merkl, Alexander, 91154 Roth (DE)
(74) Vertreter: Baudler, Ron

(57) **Zusammenfassung**

Die Erfindung betrifft eine Filtereinrichtung zur Filtration von Abwasser, wobei die Filtereinrichtung eine um eine Drehachse (1) drehbar gelagerte Trommel (16) aufweist, wobei die Filtereinrichtung eine Vielzahl von parallel zueinander verlaufenden Filterscheiben (2) aufweist, die an der Trommel (16) befestigt und gemeinsam mit dieser mit Hilfe einer Antriebseinrichtung (3) in eine Drehbewegung versetzbar sind, wobei die Filterscheiben (2) jeweils zwei parallel zueinander verlaufende Filterflächen (4) aufweisen, die mehrere in Umfangsrichtung der jeweiligen Filterscheibe (2) angeordnete und vorzugsweise miteinander in Fluidverbindung stehende Hohlräume (5) begrenzen, wobei die Hohlräume (5) über eine oder mehrere Eintrittsöffnungen (6) mit der Trommel (16) in Fluidverbindung stehen, so dass die zu filtrierende Flüssigkeit ausgehend vom Inneren der Trommel (16) über die Eintrittsöffnungen (6) in die Hohlräume (5) und das Filtrat von dort über die Filterflächen (4) nach außen strömen kann. Erfindungsgemäß wird vorgeschlagen, dass die Filterflächen (4) zumindest teilweise durch ein Filtermaterial (22) gebildet sind, welches eine Stützschicht und eine Vielzahl von mit der Stützschicht verbundenen Einzelfasern umfasst, und dass die Filtereinrichtung wenigstens eine in Richtung der Drehachse (1) bewegbare Hochdruck-Reinigungsdüse (7) aufweist, mit deren Hilfe die den jeweiligen Hohlräumen (5) abgewandten Außenflächen (13) der Filterscheiben (2) mit einer Flüssigkeit bespritzbar sind, um das Filtermaterial (22) im Gegenstrom zu reinigen.

## Beschreibung

Die vorliegende Erfindung betrifft eine Filtereinrichtung, die eine um eine Drehachse drehbar gelagerte Trommel aufweist, wobei die Filtereinrichtung eine Vielzahl von parallel zueinander verlaufenden Filterscheiben aufweist, die an der Trommel befestigt und gemeinsam mit dieser mit Hilfe einer Antriebseinrichtung in eine Drehbewegung versetzbar sind, wobei die Filterscheiben jeweils zwei parallel zueinander verlaufende Filterflächen aufweisen, die mehrere in Umfangsrichtung der jeweiligen Filterscheibe angeordnete und vorzugsweise miteinander in Fluidverbindung stehende Hohlräume begrenzen, wobei die Hohlräume über eine oder mehrere Eintrittsöffnungen mit der Trommel in Fluidverbindung stehen, so dass das zu filtrierende Abwasser ausgehend vom Inneren der Trommel über die Eintrittsöffnungen in die Hohlräume und das Filtrat (d. h. der Anteil des Abwassers, der die Filterflächen passieren kann) von dort über die Filterflächen nach außen strömen kann.

Gattungsgemäße Filtereinrichtungen sind bekannt und dienen der Filtration von Abwasser, d. h. von Wasser, in dem sich verschiedenste Verunreinigungen befinden, die während der Filtration zurückgehalten werden sollen. Zum Einsatz kommen bei entsprechenden, meist als Scheibenfilter bezeichneten, Filtereinrichtungen in der Regel gewebte Filtermaterialien, die jedoch herstellungsbedingt eine gewisse Mindestporengröße aufweisen. Dies hat zur Folge, dass das bei der Filtration entstehende Filtrat trotz entsprechender Filtration immer noch gewisse Verunreinigungen enthält.

Aufgabe der vorliegenden Erfindung ist es daher, eine Filtereinrichtung vorzuschlagen, mit deren Hilfe auch Partikel mit einem Maximaldurchmesser im µm-Bereich aus dem Abwasser entfernt werden können, wobei die Filtereinrichtung eine einfache Reinigung der Filterflächen, an denen sich die zurückgehaltenen Verunreinigungen des Abwassers während der Filtration sammeln, ermöglichen sollte.

Die Aufgabe wird gelöst durch eine Filtereinrichtung mit den Merkmalen des unabhängigen Patentanspruchs.

Prinzipiell besitzt die Filtereinrichtung eine zentrale und mit Hilfe einer Antriebseinrichtung drehbare Trommel, an der eine Vielzahl von Filterscheiben befestigt ist. Vorzugsweise besitzt jede Filterscheibe zwei parallel zueinander verlaufende Filterflächen, die sich kreisringförmig und konzentrisch mit der Trommel um diese erstrecken, wobei die Filterflächen vorzugsweise in jeweils einer senkrecht zur Drehachse der Trommel verlaufenden Ebene angeordnet sind. Die einzelnen Filterflächen können einteilig oder aber auch mehrteilig ausgebildet sein. Vorzugsweise setzt sich jede Filterfläche aus einzelnen, vorzugsweise im Wesentlichen trapezförmig ausgebildeten, Filterabschnitten zusammen, wobei die Filterabschnitte in Umfangsrichtung der jeweiligen Filterfläche, beispielsweise durch radial von der Trommel nach außen weisende Träger, voneinander getrennt und gehalten sein können.

Zudem ist es von Vorteil, wenn die Filterflächen eben ausgebildet sind, wobei die von den Filterflächen der einzelnen Filterscheiben seitlich begrenzten Hohlräume der Filterscheiben in radialer Richtung durch außen verlaufende Abschlusselemente (z. B. in Form von Deckelelementen) begrenzt sein können, die vorzugsweise konzentrisch mit der Trommel verlaufen. Die Hohlräume können in Umfangsrichtung miteinander in Fluidverbindung stehen, so dass die einzelnen Hohlräume einer Filterscheibe nicht als vollständig abgeschlossene Bereiche anzusehen sind. Vielmehr weist die Trommel eine Vielzahl von Eintrittsöffnungen auf, über die das zu filternde Abwasser vom Inneren der Trommel in die jeweiligen Hohlräume einströmen kann. Von dort strömt das Filtrat durch die Filterflächen beidseitig nach außen und kann schließlich über eine entsprechende Abzugsleitung aus der Filtereinrichtung entfernt werden. Das Retentat (d. h. die von den Filterflächen im Inneren der Filterscheiben zurückgehaltenen Verunreinigungen) sammelt sich im Gegenzug an den Innenseiten oder im Inneren der Filterflächen und muss, wie im Folgenden noch näher beschrieben, von Zeit zu Zeit von diesen abgereinigt werden.

Erfindungsgemäß zeichnet sich die Filtereinrichtung nun dadurch aus, dass die Filterflächen zumindest teilweise durch ein Filtermaterial gebildet sind, welches eine Stützschicht und eine Vielzahl von mit der Stützschicht verbundenen Einzelfasern umfasst. Die Stützschicht kann beispielsweise durch eine oder mehrere gewebte Faserschichten gebildet sein, mit der die entsprechenden Einzelfasern verbunden, beispielsweise verklebt, verschweißt oder verknotet, sind. Die Einzelfasern liegen beispielsweise als Vlies (d. h. als wirres Gelege aus einer Vielzahl von Einzelfasern) vor, das teilweise in die Stützschicht eingewebt oder auch anderweitig mit dieser verbunden sein kann. Während die Stützschicht der Stabilität des Filtermaterials dient, bilden die Einzelfasern den Großteil der eigentlichen Filterschicht, in der sich die Verunreinigungen des zu filternden Abwassers sammeln und damit als Retentat zurückbleiben.

Zudem wird erfindungsgemäß vorgeschlagen, dass die Filtereinrichtung wenigstens eine in Richtung der Drehachse bewegbare Hochdruck-Reinigungsdüse aufweist, mit deren Hilfe die den jeweiligen Hohlräumen abgewandten Außenflächen der Filterscheiben mit einer Flüssigkeit bespritzbar sind, um das Filtermaterial im Gegenstrom zu reinigen. Die Flüssigkeit wird also von außen auf das Filtermaterial aufgespritzt und durchdringt dieses in Richtung der jeweiligen Hohlräume, während das Filtrat im Laufe der Filtration ausgehend von den Hohlräumen nach außen durch das Filtermaterial tritt. Die Hochdruck-Reinigungsdüse kann einen oder mehrere Spritzköpfe umfassen, die auf eine oder mehrere Filterscheiben gerichtet sind und mit deren Hilfe die Reinigungsflüssigkeit, beispielsweise in Form des Filtrats, auf die Filterscheiben gespritzt werden kann. Unter dem Begriff "Hochdruck-Reinigungsdüse" ist im Rahmen der Erfindung eine Flüssigkeitsdüse zu verstehen, die mit Hilfe einer entsprechenden Flüssigkeitsversorgung (die unter anderem auch eine entsprechende Flüssigkeitspumpe umfasst) während eines Hochdruck-Reinigungszyklus mit einem Flüssigkeitsdruck beaufschlagt wird, der wenigstens 30 bar beträgt. Die Hochdruck-Reinigungsdüse ist schließlich während des genannten Hochdruck-Reinigungszyklus in Richtung der Drehachse bewegbar, so dass sie nacheinander allen Filterflächen zustellbar ist. Mit anderen Worten kann die Hochdruck-Reinigungsdüse also von Filterscheibe zu Filterscheibe bewegt werden, um sukzessiv alle Filterscheiben nacheinander abzureinigen.

Besonders vorteilhaft ist es hierbei, wenn das Filtermaterial als Nadelfilz ausgebildet ist. Nadelfilze weisen eine Stützschicht, insbesondere in Form eines Trägergewebes, auf, mit der die Einzelfasern durch Vernadeln verbunden sind. Die Einzelfasern werden während der Herstellung des Nadelfilzes mit Hilfe von im Stand der Technik bekannten Verfahren teilweise in die Stützschicht eingebracht und in dieser verankert, so dass ein dreidimensional wirksames Filtermedium entsteht. Im Vergleich zu ausschließlich gewebten Filtermaterialien besitzen Nadelfilze daher aufgrund des sehr fein ausgeprägten Porengefüges und des relativ großen Porenvolumens eine vielfach größere Filterfläche, so dass die Trennschärfe besonders hoch ausfällt.

In diesem Zusammenhang ist es von Vorteil, wenn die Hochdruck-Reinigungsdüse mit Hilfe eines ersten Antriebs in Richtung der Drehachse und mit Hilfe eines zweiten Antriebs in einer senkrecht zur Drehachse verlaufenden Ebene bewegbar ist, so dass das Filtermaterial der einzelnen Filterscheiben einzeln oder gruppenweise nacheinander reinigbar sind. Die Hochdruck-Reinigungsdüse wird hierbei mit Hilfe des ersten Antriebs einer ersten Filterscheibe zugestellt und anschließend mit Hilfe des zweiten Antriebs in zur Drehachse der Trommel radialer Richtung oder schräg hierzu bewegt, so dass die Außenflächen des Filtermaterials bei sich drehenden Filterscheiben spiralförmig mit Flüssigkeit bespritzt werden. Ist die Hochdruck-Reinigungsdüse in der Nähe der Trommel angekommen, so wird sie wieder nach außen bewegt, um anschließend in Richtung der Drehachse zur nächsten Filterscheibe bewegt werden zu können, wobei die zuletzt genannte Bewegung wieder mit Hilfe des ersten Antriebs erfolgt. Im Ergebnis können mit Hilfe der Hochdruck-Reinigungsdüse sämtliche Filterflächen im Verlauf des Hochdruck-Reinigungszyklus im Gegenstrom gereinigt werden.

Vorteilhaft ist es, wenn das Filtermaterial synthetische Fasern, beispielsweise Polyester-Fasern, Polypropylen-Fasern und/oder Polyamid-Fasern, umfasst, und wenn das Filtermaterial vorzugsweise mechanisch verfestigt ist. Entsprechende Fasern sind resistent gegen mechanische und chemische Belastung, so dass die Filtereinrichtung auch zur Filtrierung von aggressiven Abwässern verwendet werden kann. Denkbar ist es insbesondere, dass eine Mischung unterschiedlicher Faserarten zum Einsatz kommt, wobei insbesondere beim Einsatz von Nadelfilzen die oben genannte Stützschicht (beispielsweise in Form eines Trägergewebes) und die hiermit vernadelten Fasern aus unterschiedlichem Material bestehen können. Selbstverständlich können auch das bereits erwähnte Vlies und die entsprechende Stützschicht aus unterschiedlichen Faserarten gefertigt sein.

Vorteile bringt es zudem mit sich, wenn die Filterflächen jeweils mehrere Filtersegmente umfassen, die in Umfangsrichtung der einzelnen Filterscheiben angeordnet sind, wobei die einzelnen Filtersegmente jeweils einen Tragrahmen sowie ein mit dem Tragrahmen verbundenes Filtermaterial umfassen. Das Filtermaterial kann beispielsweise mit dem Tragrahmen (der teilweise oder vollständig aus Kunststoff bestehen kann) verschweißt oder verklebt sein. Auch eine klemmende Befestigung ist denkbar. Zudem sollte der Tragrahmen nur im Randbereich des jeweiligen Filtersegments angeordnet sein, um die Filterfläche zu maximieren. Die einzelnen Segmente können schließlich, beispielsweise über entsprechende Nuten, mit einem Träger der Filtereinrichtung verbunden bzw. von diesem gehalten sein. Die Träger können sich ausgehend von der Trommel radial nach außen erstrecken und mit dieser beispielsweise über Schrauben oder Spannbänder verbunden sein. Zudem sollte jede Filterscheibe zwei parallel verlaufende Trägeranordnungen umfassen, so dass die Filtersegmente in Form zweier Kreisringe um die Trommel angeordnet werden können und hierbei die genannten Hohlräume der entsprechenden Filterscheibe seitlich begrenzen. Schließlich können die parallel verlaufenden Trägeranordnungen einer Filterscheibe in ihrem radialen Außenbereich mit den genannten Deckelelementen verbunden sein, durch die die Hohlräume in radialer Richtung nach außen abgegrenzt und die Filtersegmente örtlich fixiert werden.

Besonders vorteilhaft ist es, wenn den einzelnen Filterflächen darüber hinaus jeweils eine oder mehrere Niederdruck-Reinigungsdüsen zugeordnet sind, mit deren Hilfe die den jeweiligen Hohlräumen abgewandten Außenflächen der Filterscheiben mit einer Flüssigkeit bespritzbar sind, um das Filtermaterial im Gegenstrom zu reinigen. Unter dem Begriff "Niederdruck-Reinigungsdüse" ist im Rahmen der Erfindung eine Flüssigkeitsdüse zu verstehen, die mit Hilfe einer entsprechenden Flüssigkeitsversorgung (die unter anderem auch eine entsprechende Flüssigkeitspumpe umfasst) während eines Niederdruck-Reinigungszyklus mit einem Flüssigkeitsdruck beaufschlagt wird, der maximal 25 bar beträgt. Die Filtervorrichtung umfasst in diesem Fall zwei Reinigungssysteme, die mit unterschiedlich hohen Drücken betrieben werden (wobei die Flüssigkeitsversorgung im Übrigen mit beiden Systemen in Wirkverbindung stehen kann; alternativ sind selbstverständlich auch separate Flüssigkeitsversorgungen und insbesondere auch separate Flüssigkeitspumpen für die Hochdruck- und die Niederdruck-Reinigungsdüsen denkbar). Die Niederdruck-Reinigungsdüsen können starr an einer entsprechenden Trägervorrichtung angeordnet sein und dienen einer mehr oder weniger kontinuierlichen Reinigung des Filtermaterials. Beispielsweise wäre es denkbar, dass die Niederdruck-Reinigungsdüsen wenigstens alle fünf, bevorzugt alle drei, Umdrehungen der Filterscheiben aktiviert werden, um ein Zusetzen des Filtermaterials zu erschweren. Im Gegensatz hierzu dienen die Hochdruck-Reinigungsdüsen der Intensivreinigung des Filtermaterials, da die von ihnen mit hohem Druck aufgespritzte Flüssigkeit das Filtermaterial besonders wirksam durchdringt und hierbei auch ins Innere des Filtermaterials vorgedrungene Verunreinigungen nach innen (d. h. in Richtung der Hohlräume) befördert. In jedem Fall sollte sich im Inneren der Trommel eine Abführeinrichtung, beispielsweise in Form einer Rinne, befinden, in die die von den einzelnen Reinigungsdüsen vom Filtermaterial entfernten Verunreinigungen fallen und anschließend aus der Filtervorrichtung entfernt werden können (die jeweiligen Reinigungsdüsen befinden sich daher vorzugsweise oberhalb der Drehachse der Trommel).

Auch ist es äußert vorteilhaft, wenn jeder Filterfläche wenigstens eine Niederdruck-Reinigungsdüse zugeordnet ist, so dass alle Filterflächen gleichzeitig reinigbar sind. Die Niederdruck-Reinigungsdüsen können in diesem Fall stationär angeordnet sein. Zudem kann jeder Filterscheibe bzw. jeder Filterfläche eine Vielzahl von Niederdruck-Reinigungsdüsen zugeordnet sein, über die die Reinigungsflüssigkeit austreten kann. Sind die einzelnen Niederdruck-Reinigungsdüsen zwischen dem Außenumfang der jeweiligen Filterscheibe und der Trommel platziert, so wird die gesamte Außenfläche des Filtermaterials mit der Reinigungsflüssigkeit bespritzt, wenn sich die Filterscheiben um die Drehachse der Trommel drehen.

Vorteilhaft ist es zudem, wenn die Hochdruck-Reinigungsdüse und die Niederdruck-Reinigungsdüsen mit einer Flüssigkeitsversorgung in Verbindung stehen, wobei die Flüssigkeitsversorgung ausgebildet ist, die Hochdruck-Reinigungsdüse mit einem Flüssigkeitsdruck zu beaufschlagen, dessen Betrag zwischen 30 bar und 220 bar, bevorzugt zwischen 40 bar und 200 bar, besonders bevorzugt zwischen 50 bar und 180 bar liegt. Je nach verwendetem Filtermaterial stellen die genannten Drücke sicher, dass das Filtermaterial bei Aktivierung der Hochdruck-Reinigungsdüse (d. h. bei Beschickung derselben mit einer Reinigungsflüssigkeit, bei der es sich um das Filtrat der Filtervorrichtung oder auch um Frischwasser handeln kann) intensiv von Verunreinigungen befreit werden. Die ursprüngliche Filterwirkung bzw. der ursprüngliche Filterdurchsatz des Filtermaterials wird hierbei wieder hergestellt. Ebenso ist es von Vorteil, wenn die Flüssigkeitsversorgung ausgebildet ist, die Niederdruck-Reinigungsdüsen mit einem Flüssigkeitsdruck zu beaufschlagen, dessen Betrag zwischen 1 bar und 25 bar, bevorzugt zwischen 1 bar und 20 bar, besonders bevorzugt zwischen 1 bar und 15 bar, liegt. Aufgrund des relativ niedrigen Drucks kann eine Vielzahl von Niederdruck-Reinigungsdüsen zum Einsatz kommen, die gleichzeitig mit Hilfe einer einzigen Flüssigkeitspumpe mit Flüssigkeit beschickt werden. Die Flüssigkeitsversorgung kann separate Flüssigkeitspumpen und separate Flüssigkeitsrohre für die Hochdruck- und die Niederdruck-Reinigungsdüsen umfassen, so dass beide Düsenarten unabhängig voneinander betrieben werden können. Alternativ können die einzelnen Flüssigkeitspumpen und Flüssigkeitsrohre auch teilweise für beide Düsenarten Verwendung finden, so dass beispielsweise eine Flüssigkeitspumpe ausreichend sein kann, die je nach Vorgabe durch eine Steuerung und der Stellung entsprechender Flüssigkeitsweichen unterschiedliche Flüssigkeitsdrücke erzeugen kann, um entweder die Hochdruck-Reinigungsdüse oder die Niederdruck-Reinigungsdüsen mit Flüssigkeit unterschiedlichen Drucks zu versorgen.

Auch ist es äußert vorteilhaft, wenn die Filtereinrichtung eine Steuerung aufweist, die ausgebildet ist, die Hochdruck-Reinigungsdüse und/oder die Niederdruck-Reinigungsdüsen nur dann zu aktivieren, wenn die Trommel und damit auch die Filterscheiben mit Hilfe der Antriebseinrichtung gedreht werden. Dies verhindert wirksam, dass die jeweiligen Reinigungsdüsen zu lange auf einen Flächenabschnitt des entsprechenden Filtermaterials gerichtet sind und eine Beschädigung derselben bewirken. Zudem stellt das Drehen der Filterscheiben sicher, dass deren Außenflächen über den gesamten Umfang mit der entsprechenden Reinigungsflüssigkeit bespritzt werden. Die Steuerung kann zudem ausgebildet sein, die jeweiligen Flüssigkeitspumpen während eines Reinigungszyklus abzuschalten. Dies ist dann sinnvoll, wenn auch die Drehung der Trommel aus irgendeinem Grund unterbrochen wird.

Ebenso ist es vorteilhaft, wenn die Filtereinrichtung eine Steuerung aufweist, die ausgebildet ist, die Hochdruck-Reinigungsdüse und/oder die Niederdruck-Reinigungsdüsen gleichzeitig oder zeitversetzt zueinander zu aktivieren. Besonders bevorzugt wird ein zeitversetzter Betrieb, wobei die Hochdruck-Reinigungsdüsen weitaus seltener aktiviert werden müssen als die Niederdruck-Reinigungsdüsen, da eine Intensivreinigung nur in längeren Zeitabständen nötig ist (während die Niederdruck-Reinigungsdüsen häufig, beispielsweise wenigstens über 50 % des Zeitraums, in dem sich die Filterscheiben drehen, mit Flüssigkeit beaufschlagt werden sollten, um einem übermäßigen Eindringen von Verunreinigungen in das Filtermaterial entgegenzuwirken).

Auch ist es von Vorteil, wenn die Filtereinrichtung eine Steuerung aufweist, die ausgebildet ist, die Hochdruck-Reinigungsdüse frühestens 1 Betriebsstunden, bevorzugt frühestens 3 Betriebsstunden, besonders bevorzugt frühestens 5 Betriebsstunden, nachdem ein Hochdruck-Reinigungszyklus abgeschlossen ist, erneut zu aktivieren. Ein Hochdruck-Reinigungszyklus umfasst die Reinigung der gesamten Außenfläche des Filtermaterials durch entsprechende Bewegung der Reinigungsdüse durch die oben genannten Antriebe. Würde die Hochdruck-Reinigungsdüse häufiger aktiviert, so würde dies in einem übermäßig hohen Energieverbrauch und insbesondere einer hohen mechanischen Belastung des Filtermaterials resultieren. Ebenso ist es jedoch auch von Vorteil, wenn die Steuerung ausgebildet ist, die Hochdruck-Reinigungsdüse spätestens 15 Betriebsstunden, bevorzugt spätestens 11 Betriebsstunden, besonders bevorzugt spätestens 8 Betriebsstunden, nachdem ein Hochdruck-Reinigungszyklus abgeschlossen ist, erneut zu aktivieren. Hierdurch wird verhindert, dass das Filtermaterial übermäßig mit den aus dem Abwasser zurückgehaltenen Verunreinigungen beladen wird (dies würde schließlich zu einer signifikanten Verringerung der Filterleistung der Filtervorrichtung führen). Unter dem Begriff "Betriebsstunden" ist im Übrigen die Zeit zu verstehen, in der sich die Filterscheiben drehen und eine Filtration von Abwasser bewirken. Zudem sei darauf hingewiesen, dass der Hochdruck-Reinigungszyklus durchaus unterbrochen werden kann (beispielsweise, weil sich die Filterscheiben zeitweise nicht drehen).

Vorteilhaft ist es, wenn die Filtereinrichtung eine Steuerung aufweist, die ausgebildet ist, die Hochdruck-Reinigungsdüse frühestens zu aktivieren, wenn die Filterflächen mit Hilfe der Niederdruck-Reinigungsdüsen 45 mal, bevorzugt 135 mal, besonders bevorzugt 225 mal, vollflächig gereinigt wurden, und/oder wenn die Steuerung ausgebildet ist, die Hochdruck-Reinigungsdüse spätestens zu aktivieren wenn die Filterflächen mit Hilfe der Niederdruck-Reinigungsdüsen 675 mal, bevorzugt 495 mal, besonders bevorzugt 360 mal, vollflächig gereinigt wurden. Besitzen die Niederdruck-Reinigungsdüsen jeweils eine Vielzahl von Reinigungsdüsen, die derart angeordnet sind, dass sie jeweils eine Filterscheibe in radialer Richtung vollständig mit Flüssigkeit bespritzen können, so ist ein Niederdruck-Reinigungszyklus, d. h. eine vollflächige Reinigung der Filterscheiben, nach einer Umdrehung derselben abgeschlossen. Liegt die Anzahl der abgeschlossen vollflächigen Reinigungsvorgänge zwischen den oben genannten Grenzwerten, so wird ein Hochdruck-Reinigungszyklus in Gang gesetzt, um eine Intensivreinigung des Filtermaterials zu bewirken.

Auch ist es äußert vorteilhaft, wenn die Antriebseinrichtung der Trommel ausgebildet ist, die Trommel während des Betriebs der Filtereinrichtung mit einer Drehzahl zu drehen, deren Betrag zwischen 0,5 Umdrehungen pro Minute und 10,0 Umdrehungen pro Minute, bevorzugt zwischen 1,0 Umdrehungen pro Minute und 5,0 Umdrehungen pro Minute, liegt. Entsprechende Werte stellen eine hohe Filtrationsleistung bei akzeptablem Energieverbrauch sicher. Zudem wird durch den angegebenen Maximalbetrag der Drehzahl sichergestellt, dass der von den jeweiligen Reinigungsdüsen erzeugte Flüssigkeitsstrahl ausreichend lang auf einen bestimmten Flächenabschnitt des Filtermaterials gerichtet ist, um eine entsprechende Gegenstromreinigung zu bewirken. Die genannte Minimaldrehzahl stellt schließlich sicher, dass die auf das Filtermaterial durch die aufgespritzte Flüssigkeit wirkende mechanische Belastung nur so hoch ist, dass eine Beschädigung des Filtermaterials ausgeschlossen ist.

Vorteilhaft ist es, wenn der zweite Antrieb ausgebildet ist, die Hochdruck-Reinigungsdüse mit einer Geschwindigkeit zu bewegen, deren Betrag zwischen 0,1 mm/s und 20 mm/s, bevorzugt zwischen 0,5 mm/s und 16 mm/s, besonders bevorzugt zwischen 1,0 mm/s und 12 mm/s, liegt. Die genannten Werte stellen eine ausreichende Reinigungswirkung der Hochdruck-Reinigungsdüse bei noch akzeptabler mechanischer Belastung des Filtermaterials sicher. Die Geschwindigkeit kann im Übrigen während der Bewegung der Hochdruck-Reinigungsdüse konstant sein. Ebenso wäre es denkbar, die Geschwindigkeit in Abhängigkeit des Abstands zwischen Hochdruck-Reinigungsdüse(n) und der Drehachse der Trommel zu variieren, beispielsweise bei der Bewegung in Richtung der Drehachse zu erhöhen.

Schließlich bringt es Vorteile mit sich, wenn die Antriebseinrichtung der Trommel und der zweite Antrieb der Hochdruck-Reinigungsdüse derart aufeinander abgestimmt sind, dass die Relativgeschwindigkeit zwischen der Hochdruck-Reinigungsdüse und einem von ihr gereinigten Filterflächenabschnitt während der Reinigung der entsprechenden Filterfläche durch die Hochdruck-Reinigungsdüse wenigstens 1,0 mm/s, bevorzugt wenigstens 1,5 mm/s, besonders bevorzugt wenigstens 2,0 mm/s, bzw. höchstens 20 mm/s, bevorzugt höchstens 18 mm/s, besonders bevorzugt höchstens 16 mm/s, beträgt. Die Reinigungswirkung ist in diesem Fall ausreichend hoch, wobei gleichzeitig sichergestellt wird, dass der aktuell mit Flüssigkeit bespritzte Flächenabschnitt des Filtermaterials nicht zu lange bespritzt wird. Eine Beschädigung bzw. übermäßige Abnutzung des Filtermaterials kann hierdurch zuverlässig vermieden werden.

Weitere Vorteile der Erfindung sind in den nachfolgenden Ausführungsbeispielen beschrieben. Es zeigen:
- **Figur 1**: eine schematische Draufsicht eines Ausschnitts einer erfindungsgemäßen Filtereinrichtung,
- **Figur 2**: eine Seitenansicht auf eine schematisch dargestellte, mit einer Trommel verbundene, Filterscheibe einer erfindungsgemäßen Filtereinrichtung,
- **Figur 3**: einen Ausschnitt der Darstellung gemäß Figur 2 mit der in Figur 2 durch einen horizontalen Pfeil dargestellten Blickrichtung, und
- **Figur 4**: ein Filtersegment einer erfindungsgemäßen Filtereinrichtung.

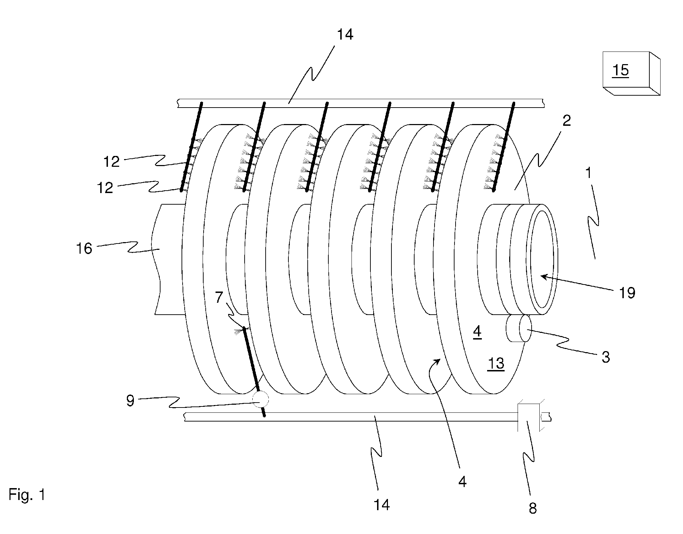

Figur 1 zeigt einen Ausschnitt einer schematischen Draufsicht einer erfindungsgemäßen Filtereinrichtung. Die Filtereinrichtung umfasst prinzipiell eine zentral angeordnete Trommel 16, die über nicht gezeigte Lagerungen drehbar in einem ebenfalls nicht gezeigten Rahmen gelagert ist, wobei die Drehung um eine Drehachse 1 mit Hilfe einer entsprechenden Antriebseinrichtung 3 erfolgt.

Am Außenumfang der Trommel 16 ist eine Vielzahl von Filterscheiben 2 befestigt (wobei in Figur 1 aus Übersichtsgründen nur eine Filterscheibe 2 mit einem Bezugszeichen versehen ist). Die Filterscheiben 2 besitzen jeweils zwei im Wesentlichen kreisringförmig ausgebildete Filterflächen 4, die einen innenliegenden Hohlraum 5 begrenzen.

Wird nun über den Einlass 19 Abwasser in die Trommel 16 geleitet, so kann dieses über entsprechende, zwischen den beiden Filterflächen 4 einer jeden Filterscheibe 2 platzierte, Eintrittsöffnungen 6 in die einzelnen Hohlräume 5 einströmen. Im weiteren Verlauf passiert das Filtrat die Filterflächen 4 ausgehend von den Hohlräumen 5 nach außen, wobei die im Abwasser enthaltenen Verunreinigungen größtenteils oder vollständig von den Filterflächen 4 zurückgehalten werden. Um auch kleinste Verunreinigungen auszufiltern, kommt als Filtermaterial erfindungsgemäß ein Filtermaterial 22 zum Einsatz, welches eine Stützschicht und eine Vielzahl von mit der Stützschicht verbundenen Einzelfasern umfasst, wobei hinsichtlich dessen möglichen Aufbau auf die obige Beschreibung verwiesen wird (insbesondere kann das Filtermaterial 22 also als Nadelfilz vorliegen).

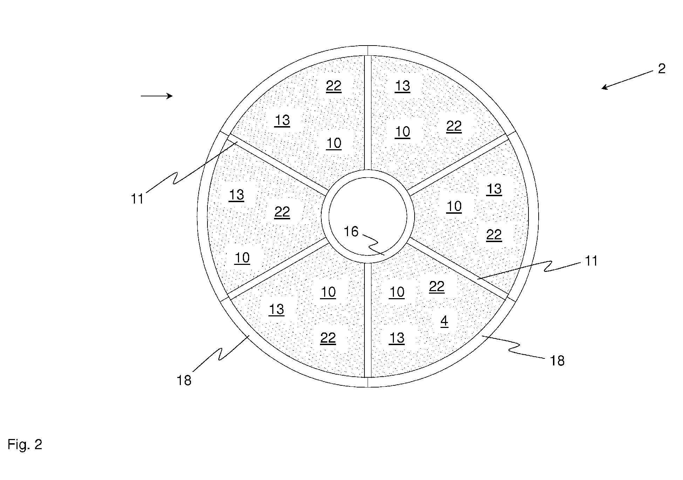

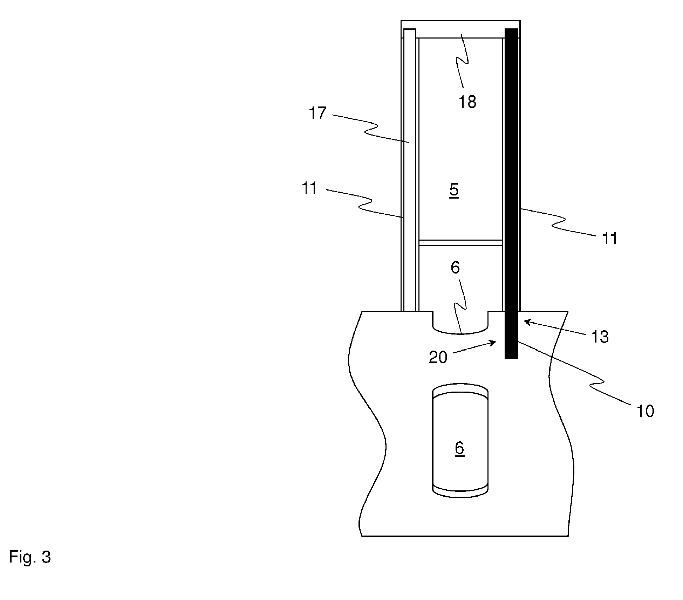

Eine mögliche Ausführung einer Filterscheibe 2 zeigt Figur 2. Wie dieser Figur zu entnehmen ist, kann die Filterscheibe 2 eine Vielzahl von Filtersegmenten 10 umfassen, die in entsprechenden Trägern 11 gehalten werden. Die Träger 11 können sich hierbei ausgehend von der Trommel 16 radial nach außen erstrecken. Zudem sollten sie zwei parallel zueinander angeordnete Halteanordnungen ausbilden, so dass die Filtersegmente 10 in zwei parallel zueinander verlaufenden Kreisringen angeordnet werden können. Ein Blick in Richtung des in Figur 2 gezeigten horizontalen Pfeils zeigt Figur 3, wobei hier mit Ausnahme eines Filtersegments 10 (siehe in Figur 3: rechts) alle in Figur 2 gezeigten Filtersegmente 10 bzw. die in Figur 2 links der vertikalen Mittelachse angeordneten Träger 11 weggelassen wurden, um Einzelheiten des sichtbaren Trägers 11 zu zeigen. Wie Figur 3 entnommen werden kann, weist der Träger 11 (der im Übrigen auch mehrteilig ausgebildet sein kann) zwei parallel verlaufende Nuten 17 auf, in die jeweils ein Filtersegment 10 gesteckt und abschließend durch ein äußeres Deckelelement 18 fixiert werden können (aus Übersichtsgründen sind nicht alle Deckelelemente 18 mit einem Bezugszeichen versehen).

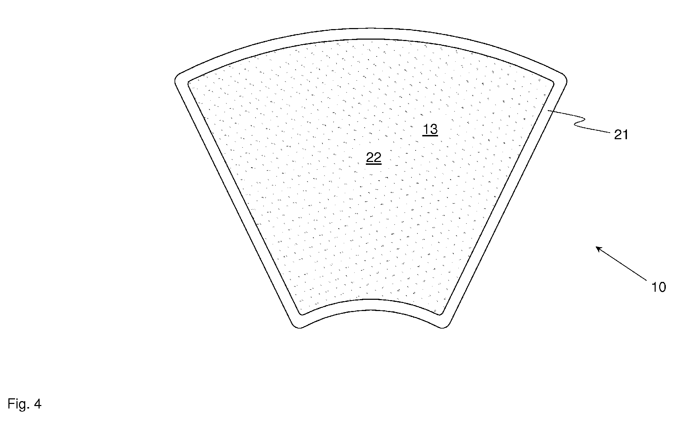

Die Filtersegmente 10, von denen eines in Figur 4 gezeigt ist, umfassen vorzugsweise jeweils einen Tragrahmen 21 und ein flächiges, mit diesem verbundenes (z. B. verschweißtes oder verklebtes) Filtermaterial 22. Werden die einzelnen Filtersegmente 10 nun in die parallel verlaufenden Nuten 17 eingesetzt (vergleiche Figuren 2 und 3), so entstehen schließlich die genannten Hohlräume 5, in die das Abwasser über die Eintrittsöffnungen 6 der Trommel 16 einströmen kann. Das Filtrat strömt schließlich über die jeweiligen Innenflächen 20 des Filtermaterials 22 durch dieses hindurch und tritt über die Außenflächen 13 desselben in den Bereich zwischen den Filterscheiben 2, um schließlich aus der Filtereinrichtung abgezogen werden zu können. Die Filtereinrichtung besitzt selbstverständlich ein Gehäuse, in dem sich die in den Figuren gezeigten Bauteile befinden und das dem Auffangen des Filtrats dient. Das Filtrat hat im Übrigen in etwa einen Pegel, der bis in die Höhe der Drehachse 1 der Trommel 16 reicht.

Unabhängig von der genauen Ausgestaltung der Filterscheiben 2 sammeln sich nach einer gewissen Filtrationszeit im Abwasser vorhandene Verunreinigungen an der Innenfläche 20 bzw. innerhalb des Filtermaterials 22 an.

Die Filtervorrichtung umfasst daher zumindest eine in Figur 1 gezeigte Hochdruck-Reinigungsdüse 7, die mit Hilfe eines ersten Antriebs 8 (beispielsweise eines Elektroantriebs, der mit einem Riemen oder einer Kette mit einem Träger 11 der Hochdruck-Reinigungsdüse 7 in Wirkverbindung steht) in Richtung der Drehachse 1 der Trommel 16 hin und her bewegbar ist, so dass sie nach und nach jeder der Filterflächen 4 zustellbar ist. Des Weiteren ist der entsprechenden Hochdruck-Reinigungsdüse 7 ein zweiter Antrieb 9 zugeordnet, mit dem die Hochdruck-Reinigungsdüse 7 auf die Trommel 16 zu und von dieser wegbewegt werden kann (die Bewegung erfolgt radial zur Drehachse 1, wobei die Bewegung auf einer geraden oder auch gekrümmten Linie erfolgen kann).

Wird die Hochdruck-Reinigungsdüse 7 durch eine Steuerung 15 aktiviert, so wird sie mit Hilfe des ersten Antriebs 8 einer ersten Filterscheibe 2 zugestellt sich anschließend bei drehender Filterscheibe 2 mit Hilfe des zweiten Antriebs 9 langsam in Richtung der Trommel 16 bewegt, um die gesamte Außenfläche 13 des benachbarten Filtermaterials 22 mit einer Reinigungsflüssigkeit (vorzugsweise mit Filtrat) zu bespritzen (die Hochdruck-Reinigungsdüse 7 steht hierfür mit einer Flüssigkeitsversorgung 14 in Kontakt, über die die Reinigungsflüssigkeit mit Hilfe einer entsprechenden Flüssigkeitspumpe zugeführt wird). Hierbei wird das Filtermaterial 22 von der Reinigungsflüssigkeit durchdrungen, so dass anhaftende Verunreinigungen in Richtung der Hohlräume 5 gespült werden. Von dort können sie schließlich nach unten durch die Eintrittsöffnungen 6 der Trommel 16 in deren Innenraum fallen. Ist im Inneren der Trommel 16 eine nicht gezeigte Auffangvorrichtung (beispielsweise eine Rinne) angeordnet, so werden die Verunreinigungen aufgefangen und können aus der Filtervorrichtung entfernt werden.

Darüber hinaus kann die Filtervorrichtung schließlich eine zweite Reinigungsanordnung aufweisen, die eine Vielzahl von Niederdruck-Reinigungsdüsen 12 umfasst (siehe Figur 1; aus Übersichtsgründen sind nicht alle Niederdruck-Reinigungsdüsen 12 mit einem Bezugszeichen versehen). Während die Hochdruck-Reinigungsdüsen 7 nur selten aktiviert werden muss, ist es sinnvoll, die Niederdruck-Reinigungsdüsen 12 relativ häufig zu aktivieren, um dem Eindringen von Verunreinigungen in das Filtermaterial 22 entgegenzuwirken. Die Niederdruck-Reinigungsdüsen 12 können ortsfest fixiert oder um eine parallel zur Drehachse 1 verlaufende Achse verschwenkbar sein und sind vorzugsweise derart ausgerichtet, dass sie die einzelnen Filterflächen 4 in radialer Richtung durchgehend mit Reinigungsflüssigkeit bespritzen können, so dass die Filterscheiben 2 während ihrer Drehung vollflächig gereinigt werden.

Hinsichtlich der einzelnen bereits beschriebenen Merkmale und deren vorteilhafter Weiterbildungen wird auf die allgemeine Beschreibung verwiesen, wobei die Merkmale und Weiterbildungen der Erfindung einzeln oder in beliebiger Kombination bei den gezeigten Ausführungsbeispielen verwirklicht sein können.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind.

### Bezugszeichenliste

- 1: Drehachse
- 2: Filterscheibe
- 3: Antriebseinrichtung
- 4: Filterfläche
- 5: Hohlraum
- 6: Eintrittsöffnung
- 7: Hochdruck-Reinigungsdüse
- 8: erster Antrieb
- 9: zweiter Antrieb
- 10: Filtersegment
- 11: Träger
- 12: Niederdruck-Reinigungsdüse
- 13: Außenfläche
- 14: Flüssigkeitsversorgung
- 15: Steuerung
- 16: Trommel
- 17: Nut
- 18: Deckelelement
- 19: Einlass
- 20: Innenfläche
- 21: Tragrahmen
- 22: Filtermaterial

## Patentansprüche

1. Filtereinrichtung zur Filtration von Abwasser,
- wobei die Filtereinrichtung eine um eine Drehachse (1) drehbar gelagerte Trommel (16) aufweist,
- wobei die Filtereinrichtung eine Vielzahl von parallel zueinander verlaufenden Filterscheiben (2) aufweist, die an der Trommel (16) befestigt und gemeinsam mit dieser mit Hilfe einer Antriebseinrichtung (3) in eine Drehbewegung versetzbar sind,
- wobei die Filterscheiben (2) jeweils zwei parallel zueinander verlaufende Filterflächen (4) aufweisen, die mehrere in Umfangsrichtung der jeweiligen Filterscheibe (2) angeordnete und vorzugsweise miteinander in Fluidverbindung stehende Hohlräume (5) begrenzen,
- wobei die Hohlräume (5) über eine oder mehrere Eintrittsöffnungen (6) mit der Trommel (16) in Fluidverbindung stehen, so dass das zu filtrierende Abwasser ausgehend vom Inneren der Trommel (16) über die Eintrittsöffnungen (6) in die Hohlräume (5) und das Filtrat von dort über die Filterflächen (4) nach außen strömen kann,
**dadurch gekennzeichnet, dass**
- die Filterflächen (4) zumindest teilweise durch ein Filtermaterial (22) gebildet sind, welches eine Stützschicht und eine Vielzahl von mit der Stützschicht verbundenen Einzelfasern umfasst, und dass die Filtereinrichtung wenigstens eine in Richtung der Drehachse (1) bewegbare Hochdruck-Reinigungsdüse (7) aufweist, mit deren Hilfe die den jeweiligen Hohlräumen (5) abgewandten Außenflächen (13) der Filterscheiben (2) mit einer Flüssigkeit bespritzbar sind, um das Filtermaterial (22) im Gegenstrom zu reinigen.

2. Filtereinrichtung gemäß Anspruch 1, **dadurch gekennzeichnet, dass** das Filtermaterial (22) als Nadelfilz ausgebildet ist.

3. Filtereinrichtung gemäß einem der vorangegangenen Ansprüche, **dadurch gekennzeichnet, dass** die Hochdruck-Reinigungsdüse (7) mit Hilfe eines ersten Antriebs (8) in Richtung der Drehachse (1) und mit Hilfe eines zweiten Antriebs (9) in einer senkrecht zur Drehachse (1) verlaufenden Ebene bewegbar ist, so dass das Filtermaterial (22) der einzelnen Filterscheiben (2) einzeln oder gruppenweise nacheinander reinigbar ist.

4. Filtereinrichtung gemäß einem der vorangegangenen Ansprüche, **dadurch gekennzeichnet, dass** das Filtermaterial (22) synthetische Fasern, beispielsweise Polyester-Fasern, Polypropylen-Fasern und/oder Polyamid-Fasern, umfasst, und dass das Filtermaterial (22) vorzugsweise mechanisch verfestigt ist.

5. Filtereinrichtung gemäß einem der vorangegangenen Ansprüche, **dadurch gekennzeichnet, dass** die Filterflächen (4) jeweils mehrere Filtersegmente (10) umfassen, die in Umfangsrichtung der Filterscheiben (2) angeordnet sind, wobei die einzelnen Filtersegmente (10) jeweils einen Tragrahmen (21) sowie ein mit dem Tragrahmen (21) verbundenes Filtermaterial (22) umfassen.

6. Filtereinrichtung gemäß einem der vorangegangenen Ansprüche, **dadurch gekennzeichnet, dass** den einzelnen Filterflächen (4) darüber hinaus jeweils eine oder mehrere Niederdruck-Reinigungsdüsen (12) zugeordnet sind, mit deren Hilfe die den jeweiligen Hohlräumen (5) abgewandten Außenflächen (13) der Filterscheiben (2) mit einer Flüssigkeit bespritzbar sind, um das Filtermaterial (22) im Gegenstrom zu reinigen.

7. Filtereinrichtung gemäß dem vorangegangenen Anspruch, **dadurch gekennzeichnet, dass** jeder Filterfläche (4) wenigstens eine Niederdruck-Reinigungsdüse (12) zugeordnet ist, so dass alle Filterflächen (4) gleichzeitig reinigbar sind.

8. Filtereinrichtung gemäß Anspruch 6 oder 7, **dadurch gekennzeichnet, dass** die Hochdruck-Reinigungsdüse (7) und die Niederdruck-Reinigungsdüsen (12) mit einer Flüssigkeitsversorgung (14) in Verbindung stehen, wobei die Flüssigkeitsversorgung (14) ausgebildet ist, die Hochdruck-Reinigungsdüse (7) mit einem Flüssigkeitsdruck zu beaufschlagen, dessen Betrag zwischen 30 bar und 220 bar, bevorzugt zwischen 40 bar und 200 bar, besonders bevorzugt zwischen 50 bar und 180 bar liegt, und dass die Flüssigkeitsversorgung (14) ausgebildet ist, die Niederdruck-Reinigungsdüsen (12) mit einem Flüssigkeitsdruck zu beaufschlagen, dessen Betrag zwischen 1 bar und 25 bar, bevorzugt zwischen 1 bar und 20 bar, besonders bevorzugt zwischen 1 bar und 15 bar, liegt.

9. Filtereinrichtung gemäß einem der vorangegangenen Ansprüche,
**dadurch gekennzeichnet, dass** die Filtereinrichtung eine Steuerung (15) aufweist, die ausgebildet ist, die Hochdruck-Reinigungsdüse (7) und/oder die Niederdruck-Reinigungsdüsen (12) nur dann zu aktivieren, wenn die Trommel (16) und damit auch die Filterscheiben (2) mit Hilfe der Antriebseinrichtung (3) gedreht werden.

10. Filtereinrichtung gemäß einem der vorangegangenen Ansprüche,
**dadurch gekennzeichnet, dass** die Filtereinrichtung eine Steuerung (15) aufweist, die ausgebildet ist, die Hochdruck-Reinigungsdüse (7) und/oder die Niederdruck-Reinigungsdüsen (12) gleichzeitig oder zeitversetzt zueinander zu aktivieren.

11. Filtereinrichtung gemäß einem der vorangegangenen Ansprüche,
**dadurch gekennzeichnet, dass** die Filtereinrichtung eine Steuerung (15) aufweist, die ausgebildet ist, die Hochdruck-Reinigungsdüse (7) frühestens 1 Betriebsstunden, bevorzugt frühestens 3 Betriebsstunden, besonders bevorzugt frühestens 5 Betriebsstunden, nachdem ein Hochdruck-Reinigungszyklus abgeschlossen ist, erneut zu aktivieren, und/oder dass die Steuerung (15) ausgebildet ist, die Hochdruck-Reinigungsdüse (7) spätestens 15 Betriebsstunden, bevorzugt spätestens 11 Betriebsstunden, besonders bevorzugt spätestens 8 Betriebsstunden, nachdem ein Hochdruck-Reinigungszyklus abgeschlossen ist, erneut zu aktivieren.

12. Filtereinrichtung gemäß einem der vorangegangenen Ansprüche, **dadurch gekennzeichnet, dass** die Filtereinrichtung eine Steuerung (15) aufweist, die ausgebildet ist, die Hochdruck-Reinigungsdüse (7) frühestens zu aktivieren, wenn die Filterflächen (4) mit Hilfe der Niederdruck-Reinigungsdüsen (12) 45 mal, bevorzugt 135 mal, besonders bevorzugt 225 mal, vollflächig gereinigt wurden, und/oder dass die Steuerung (15) ausgebildet ist, die Hochdruck-Reinigungsdüse (7) spätestens zu aktivieren, wenn die Filterflächen (4) mit Hilfe der Niederdruck-Reinigungsdüsen (12) 675 mal, bevorzugt 495 mal, besonders bevorzugt 360 mal, vollflächig gereinigt wurden.

13. Filtereinrichtung gemäß einem der vorangegangenen Ansprüche, **dadurch gekennzeichnet, dass** die Antriebseinrichtung (3) der Trommel (16) ausgebildet ist, die Trommel (16) während des Betriebs der Filtereinrichtung mit einer Drehzahl zu drehen, deren Betrag zwischen 0,5 Umdrehungen pro Minute und 10,0 Umdrehungen pro Minute, bevorzugt zwischen 1,0 Umdrehungen pro Minute und 5,0 Umdrehungen pro Minute, liegt.

14. Filtereinrichtung gemäß einem der vorangegangenen Ansprüche, **dadurch gekennzeichnet, dass** der zweite Antrieb (9) ausgebildet ist, die Hochdruck-Reinigungsdüse (7) mit einer Geschwindigkeit zu bewegen, deren Betrag zwischen 0,1 mm/s und 20 mm/s, bevorzugt zwischen 0,5 mm/s und 16 mm/s, besonders bevorzugt zwischen 1,0 mm/s und 12 mm/s, liegt.

15. Filtereinrichtung gemäß einem der vorangegangenen Ansprüche, **dadurch gekennzeichnet, dass** die Antriebseinrichtung (3) der Trommel (16) und der zweite Antrieb (9) der Hochdruck-Reinigungsdüse (7) derart aufeinander abgestimmt sind, dass die Relativgeschwindigkeit zwischen der Hochdruck-Reinigungsdüse (7) und einem von ihr gereinigten Flächenabschnitt des Filtermaterials (22) während der Reinigung der entsprechenden Filterfläche (4) durch die Hochdruck-Reinigungsdüse (7) wenigstens 1,0 mm/s, bevorzugt wenigstens 1,5 mm/s, besonders bevorzugt wenigstens 2,0 mm/s, beträgt, und/oder dass die Relativbewegung zwischen der Hochdruck-Reinigungsdüse (7) und dem von ihr gereinigten Flächenabschnitt des Filtermaterials (22) während der Reinigung der entsprechenden Filterfläche (4) durch die Hochdruck-Reinigungsdüse (7) höchstens 20 mm/s, bevorzugt höchstens 18 mm/s, besonders bevorzugt höchstens 16 mm/s, beträgt.
